# EUROPEAN PATENT SPECIFICATION

(11) **EP 4 283 074 B1**
(45) Date of publication and mention of the grant of the patent: **16.10.2024**
(21) Application number: 22206627.6
(22) Date of filing: 10.11.2022
(51) Int. Cl.: E04G 23/02, E04H 9/02

(54) **CAULKING MONITORING SERVO APPARATUS AND CAULKING RESTORING METHOD**
SERVOVORRICHTUNG ZUR VERSTEMMUNGSÜBERWACHUNG UND VERFAHREN ZUR WIEDERHERSTELLUNG DER VERSTEMMUNG
APPAREIL ASSERVI DE SURVEILLANCE DE CALFEUTRAGE ET PROCÉDÉ DE RESTAURATION DE CALFEUTRAGE

(30) Priority: 24.05.2022 CN 202210567068
(43) Date of publication of application: 29.11.2023
(73) Proprietor: China Three Gorges Co., Ltd., Wuhan Hubei 430010 (CN)
(72) Inventor: GAO, Chao, Wuhan 430010 (CN); WANG, Zhiwei, Wuhan 430010 (CN); LI, Yuxin, Wuhan 430010 (CN); YU, Jie, Wuhan 430010 (CN); ZHANG, Zhijun, Wuhan 430010 (CN)
(74) Representative: Groth & Co. KB

(56) References cited:
- CN-A- 114 086 794
- US-A1- 2017 350 152

## Description

### TECHNICAL FIELD

The present invention relates to the field of construction reinforcement technologies, and specifically to a caulking monitoring servo apparatus and a caulking restoring method.

### BACKGROUND

Structural gaps are common in industrial and civil construction in civil engineering. There are generally two types of gaps: cracks such as structural cracks, brittle fracture cracks, and settlement cracks caused by stress overload structural damage; and construction gaps, that is, gaps specially pre-designed for construction requirements, for example, seismic joints and temperature expansion joints in modem structures and gaps reserved for easy installation between mortise and tenon nodes in conventional wood construction. Although some gaps are essential for construction, the presence of gaps poses potential safety risks to the structural safety, especially potential safety risks under the effect of earthquakes. For example, for beam-column nodes, when there are gaps in the nodes, the stiffness and bearing capacity of the nodes are significantly reduced.

Disclosed in an existing technology (see CN 114 086 794 B) is a longitudinal caulking and monitoring restoring apparatus, including: a first panel, provided with a plurality of guide holders; a second panel, arranged opposite to the first panel; a stranded wire, wound on the guide holders, where a first end of the stranded wire is connected to a stranded wire end holder, the stranded wire end holder is fixedly connected to the second panel, a second end of the stranded wire extends into the space between the second panel and the first panel and is connected to a fastening apparatus, and the fastening apparatus is capable of tightening and releasing the stranded wire; four groups of elastic assemblies, arranged between the first panel and the second panel and being respectively close to corners of the second panel, where a first end of the elastic assembly is fixedly connected to the first panel, and a second end of the elastic assembly is fixedly connected to the second panel; and two groups of air columns, where a connecting line of one group of air columns intersects a connecting line of the other group of air columns to form a cross, each group of air columns includes two air columns, the first panel is provided with one air channel corresponding to each air column and an air slot in communication with a first end of the air channel, the air column is an elastic hollow column with an opening at a first end and a closed second end, the first panel is provided with a first limit groove around the air slot, the first end of the air column is inserted in the first limit groove, the opening is opposite to the air slot, the second end of the air column abuts against the second panel, a second end of the air channel is provided with an air nozzle, and the air nozzle is connected to an air pressure gauge. The foregoing existing technology can implement caulking and have the functions of gap deformation monitoring and seismic gap restoration. However, the foregoing existing technology ignores the problem that two sidewalls of a gap are not absolutely flat and is not applicable to caulking when sidewalls of a gap are not flat, resulting in a narrow application range.

### SUMMARY

Therefore, a technical problem to be resolved by the present invention is to overcome the disadvantage that the longitudinal caulking and monitoring restoring apparatus in the existing technology is not applicable to caulking when sidewalls of a gap are not flat, and provide a caulking monitoring servo apparatus and a caulking restoring method that can adapt to caulking when sidewalls of a gap are not flat.

To resolve the foregoing technical problem, the present invention provides a caulking monitoring servo apparatus, including: a cushioning pad; and two side plate assemblies, respectively connected to two sides of the cushioning pad, where each side plate assembly includes a porous plate, an oil distribution structure, and jack posts, a plurality of rows and a plurality of columns of jack post holes are provided in a side of the porous plate away from the cushioning pad, a plurality of oil distribution channel holes are provided in the porous plate, each oil distribution channel hole is in communication with one row of jack post holes, the oil distribution structure includes oil distribution channels having a one-to-one correspondence with the plurality of oil distribution channel holes and an oil inlet cavity in communication with first ends of the plurality of oil distribution channels, the oil inlet cavity is connected to an oil inlet nozzle, oil outlet holes having a one-to-one correspondence with jack post holes in a corresponding row are provided in each oil distribution channel, each oil distribution channel is movably arranged in a corresponding oil distribution channel hole and has a first position that allows communication between each oil outlet hole and a corresponding jack post hole and a second position that allows each oil outlet hole to be blocked by a hole wall of the oil distribution channel hole, a plurality of rows and a plurality of columns of jack posts are arranged and have a one-to-one correspondence with the plurality of rows and the plurality of columns of jack post holes, and the jack posts are movably arranged in the jack post holes; a plurality of groups of electromagnets, where each group of electromagnets includes two electromagnets arranged opposite to each other and respectively arranged on the two sides of the cushioning pad; and a controller, respectively electrically connected to each electromagnet.

Optionally, the oil distribution channel hole penetrates the porous plate, a length of the oil distribution channel is greater than a length of the oil distribution channel hole, and the oil distribution structure further includes a sealing plate configured to seal second ends of the plurality of oil distribution channels.

Optionally, a plurality of first limit grooves are provided in the porous plate, and the electromagnets are arranged in the first limit grooves.

Optionally, a second limit groove is further provided in the porous plate, the cushioning pad is arranged in the second limit groove, each first limit groove is provided at a groove bottom of the second limit groove, and a depth of the first limit groove is equal to a thickness of the electromagnet.

Optionally, four groups of electromagnets are arranged and are respectively arranged near four corners of the porous plate.

Optionally, two controllers are arranged and are respectively arranged on two porous plates, and each controller is respectively electrically connected to a plurality of electromagnets arranged on the same side of the cushioning pad.

Optionally, the porous plate is further provided with:
oil return branch passages, arranged between any two adjacent rows of jack post holes, where the jack post holes are in communication with the oil return branch passage through oil discharge ports; and
an oil return main passage, arranged on the same side of a plurality of oil return branch passages, and being in communication with the oil return branch passages, where an end of the oil return main passage is connected to an oil return nozzle, and the oil return nozzle protrudes from the porous plate.

Optionally, each jack post includes a solid post body and a solid post cap, a diameter of the post body is equal to a diameter of the oil outlet hole, and the post cap has a hemispherical shape.

Optionally, the cushioning pad has a hollow cavity, an air hole in communication with the hollow cavity is provided in a sidewall of the cushioning pad, and the sidewall of the cushioning pad has a corrugated shape.

The present invention further provides a caulking restoring method, applied to the caulking monitoring servo apparatus, where the caulking restoring method includes:
S 1. compressing the cushioning pad to make a total thickness of the caulking monitoring servo apparatus less than a width of a gap to be caulked;
S2. inserting the caulking monitoring servo apparatus into the gap, and releasing the compression of the cushioning pad, where an elastic force of the cushioning pad makes the jack posts abut against a sidewall of the gap;
S3. adjusting positions of the oil distribution channels in the oil distribution channel holes to the first position;
S4. energizing the electromagnets to make two opposite electromagnets have the same polarity, and recording a real-time value of repulsion between each group of electromagnets as a monitored value of adaptive adjustment of the jack posts;
S5. externally connecting the oil inlet nozzle to an oil pump, feeding hydraulic oil into the oil inlet cavity, where the hydraulic oil enters the jack post holes through the oil outlet holes, and the jack posts are pushed by the hydraulic oil to move outward, and when the monitored value starts to change, adjusting the positions of the oil distribution channels in the oil distribution channel holes to the second position, removing the oil pump, and sealing the oil inlet nozzle; and
S6. keeping the polarity of each group of opposite electromagnets the same, recording the real-time value of the repulsion between each group of electromagnets as an initial value of deformation monitoring of a gap node construction member, and simultaneously recording a real-time value of a magnetic force of each electromagnet as a backtracking value for stopping restoring support; and
when the gap has undergone changes in position and shape, the caulking restoring method further includes:
   S7. adjusting a spacing between the two side plate assemblies by adjusting magnitude and polarity of magnetic forces of the groups of opposite electromagnets; and
   S8. adjusting the magnetic force of each electromagnet to the backtracking value, and observing the repulsion between each group of electromagnets and repeating the step S7 until the repulsion between each group of electromagnets reaches the initial value.

The technical solution in the present invention has the following advantages:
In the caulking monitoring servo apparatus provided in the present invention, a cushioning pad is arranged between two side plate assemblies, so that pressure may be applied to the side plate assemblies on left and right sides of the entire caulking monitoring servo apparatus, to compress the cushioning pad. When the thickness of the entire caulking monitoring servo apparatus is less than the width of a gap to be caulked, the caulking monitoring servo apparatus may be readily caulked in the gap. After the caulking monitoring servo apparatus is caulked in the gap, the pressure on the side plate assemblies is released, that is, the compression of the cushioning pad is released, and the elastic force of the cushioning pad make jack posts of the side plate assemblies abut against sidewalls of the gap. Next, the positions of oil distribution channels are adjusted, so that the positions of the oil distribution channels in the oil distribution channel holes are a first position. In this case, oil outlet holes in the oil distribution channels are in communication with jack post holes. Next, electromagnets are energized to make two opposite electromagnets have the same polarity, and a real-time value of repulsion between each group of electromagnets is recorded as a monitored value of adaptive adjustment of the jack posts. Next, the oil inlet nozzle is externally connected to an oil pump, and hydraulic oil is fed into the oil inlet cavity. The hydraulic oil enters the jack post holes through the oil outlet holes, and the jack posts are pushed by the hydraulic oil to move outward, to enable the jack posts to tightly abut against two sidewalls of the gap. When the sidewalls of the gap are not flat, the jack posts at different positions move outward by different distances, to achieve applicability to caulking when the sidewalls of the gap are not flat. When the monitored value starts to change, it indicates that in this case the positions of the jack posts are limited by the sidewalls of the gap and as a result the jack posts are kept from moving. The force of the hydraulic oil makes the cushioning pad compress to cause the positions of two electromagnets in one group of electromagnets to change. In this case, it indicates that the positions of the jack posts are adjusted in place. Therefore, the positions of the oil distribution channels in the oil distribution channel holes are adjusted to a second position. The oil outlet holes are blocked by hole walls of the oil distribution channel holes. The oil pump is removed, and the oil inlet nozzle is sealed, to prevent the cushioning pad from being further compressed. In addition, the jack posts are locked after adaptive adjustment, to keep the jack posts from excessively jacking the sidewalls of the gap. Next, the polarity of each group of opposite electromagnets is kept the same, the real-time value of the repulsion between each group of electromagnets is recorded as an initial value of deformation monitoring of a gap node construction member, and simultaneously a real-time value of a magnetic force of each electromagnet is recorded as a backtracking value for stopping restoring support. When the gap has undergone changes in position and shape, a spacing between the two side plate assemblies is first adjusted by adjusting magnitude and polarity of magnetic forces of the groups of opposite electromagnets. In this case, the electromagnets may repel or attract each other with a relatively large magnetic force, to drive the adjustment of the spacing between the two side plate assemblies. Next, the magnetic force of each electromagnet is adjusted to the backtracking value, the repulsion between each group of electromagnets is observed, and the electromagnets are repeatedly adjusted to repel or attract each other with a relatively large magnetic force, until the repulsion between each group of electromagnets reaches the initial value, indicating that the spacing of the gap returns to the state before deformation, and the member is restored. Therefore, the caulking monitoring servo apparatus has functions such as caulking, monitoring, and restoring and has high adaptability to nonplanar complex gap sidewalls such as rough and uneven surfaces and voids and pits.

### BRIEF DESCRIPTION OF THE DRAWINGS

To describe the technical solutions in specific embodiments of the present invention or the prior art more clearly, the following briefly introduces the accompanying drawings required for describing the specific embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of a caulking monitoring servo apparatus according to Embodiment 1 of the present invention;
FIG. 2 is an exploded view of the caulking monitoring servo apparatus shown in FIG. 1;
FIG. 3 is a bottom view of a porous plate;
FIG. 4 is a side view of a porous plate;
FIG. 5 is a cross-sectional view along A-A in FIG. 3;
FIG. 6 is a cross-sectional view along B-B in FIG. 3;
FIG. 7 is a cross-sectional view along C-C in FIG. 3;
FIG. 8 is a cross-sectional view along D-D in FIG. 3; and
FIG. 9 is a cross-sectional view along E-E in FIG. 4.

### Reference numerals:

1. cushioning pad; 101. air hole; 2. side plate assembly; 201. porous plate; 2011. jack post hole; 2012. oil distribution channel hole; 2013. first limit groove; 2014. second limit groove; 2015. oil return branch passage; 2016. oil discharge port; 2017. oil return main passage; 2018. oil return nozzle; 202. oil distribution structure; 2021.oil distribution channel; 20211. oil outlet hole; 2022. oil inlet cavity; 2023. oil inlet nozzle; 2024. sealing plate; 203. jack post; 2031. post body; 2032. post cap; 3. electromagnet; and 4. controller.

### DETAILED DESCRIPTION

The following clearly and completely describes the technical solutions of the present invention with reference to the accompanying drawings. Apparently, the described embodiments are merely some rather than all of the embodiments of the present invention.

In the description of the present invention, it needs to be understood that orientation or location relationships indicated by terms "center", "up", "down", "left", "right", "vertical", "horizontal", "inside", and "outside" are based on orientation or location relationships shown in the accompanying drawings, and are only used to facilitate description of the present invention and simplify description, but are not used to indicate or imply that the apparatuses or elements must have specific orientations or are constructed and operated by using specific orientations, and therefore, cannot be understood as a limit to the present invention. In addition, the terms "first", "second", and "third" are used only for description, but are not intended to indicate or imply relative importance.

In the description of the present invention, it needs to be noted that unless otherwise expressly specified and defined, "mounted", "connected", and "connection", should be understood in a broad sense, for example, fixedly connected, detachably connected or integrally connected; or mechanically connected or electrically connected; or connected directly or indirectly through an intermediate, or two elements communicated internally. For a person of ordinary skill in the art, specific meanings of the terms in the present invention should be understood according to specific cases.

### Embodiment 1

Structural gaps are common in industrial and civil construction in civil engineering. There are generally two types of gaps: cracks such as structural cracks, brittle fracture cracks, and settlement cracks caused by stress overload structural damage; and construction gaps, that is, gaps specially pre-designed for construction requirements, for example, seismic joints and temperature expansion joints in modem structures and gaps reserved for easy installation between mortise and tenon nodes in conventional wood construction. Although some gaps are essential for construction, the presence of gaps poses potential safety risks to the structural safety, especially potential safety risks under the effect of earthquakes. For example, for beam-column nodes, when there are gaps in the nodes, the stiffness and bearing capacity of the nodes are significantly reduced.

A longitudinal caulking and monitoring restoring apparatus disclosed in an existing technology ignores the problem that two sidewalls of a gap are not absolutely flat and is not applicable to caulking when sidewalls of a gap are not flat, resulting in a narrow application range.

For this, this embodiment provides a caulking monitoring servo apparatus. The caulking monitoring servo apparatus can adapt to caulking when sidewalls of a gap are not flat.

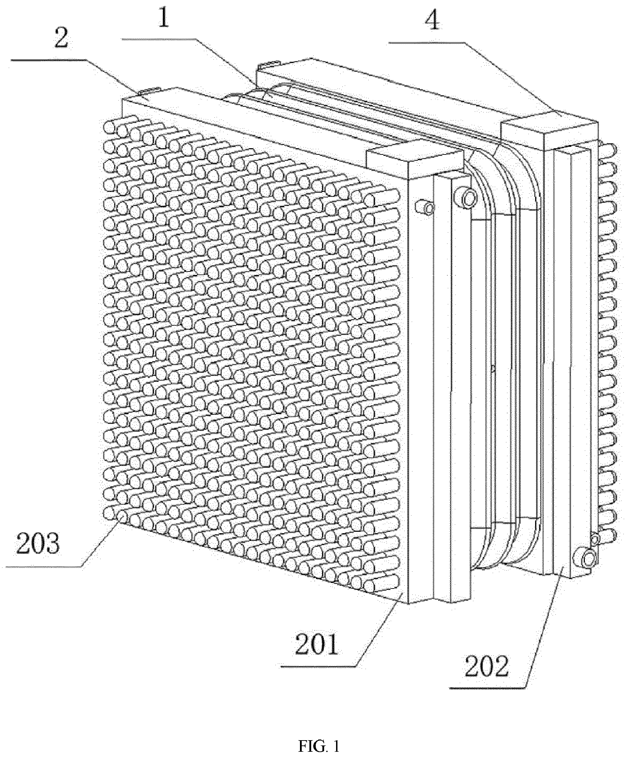

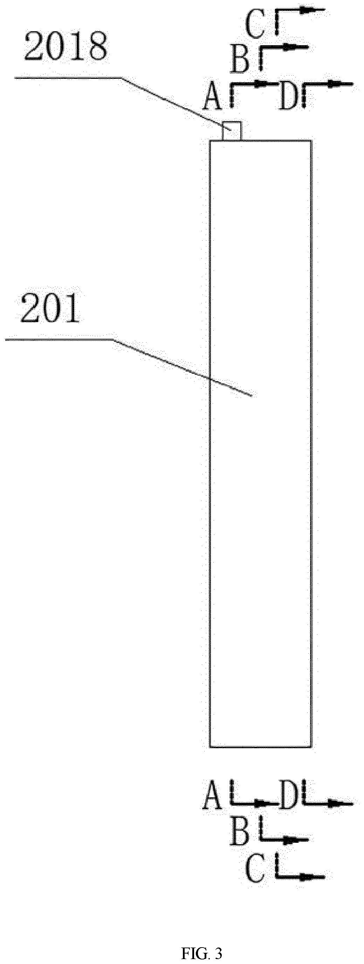

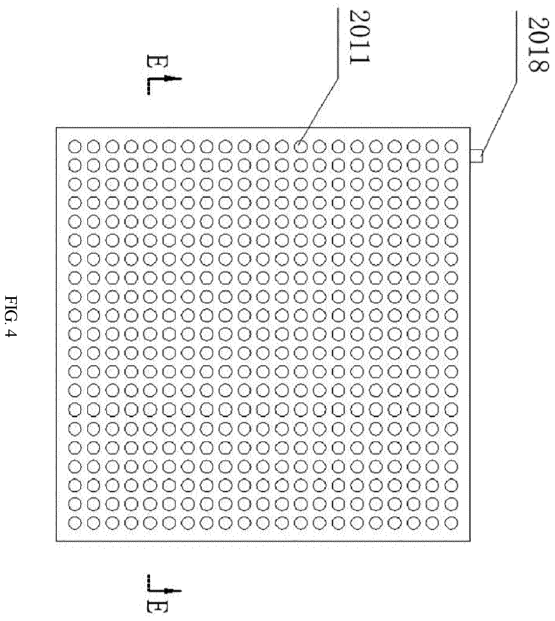

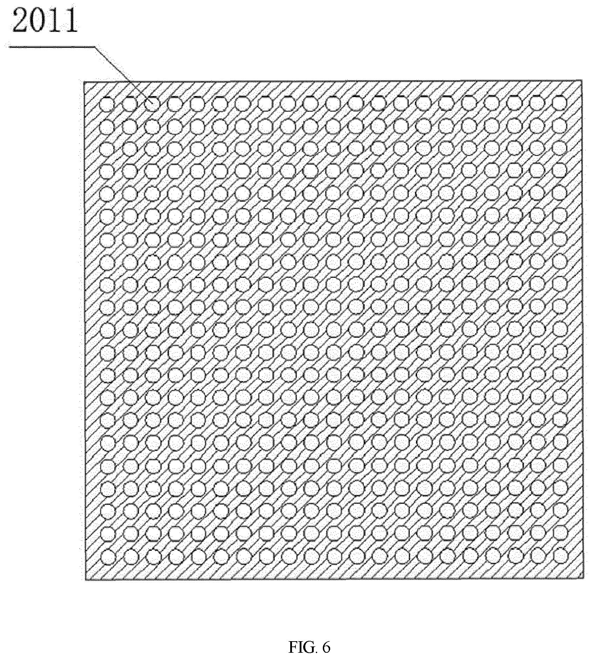

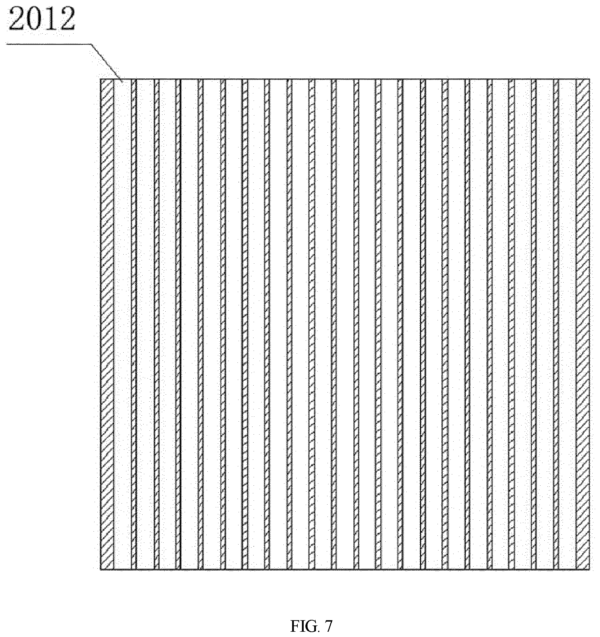

In an embodiment, as shown in FIG. 1 to FIG. 9, the caulking monitoring servo apparatus includes a cushioning pad 1, a side plate assembly 2, an electromagnet 3, and a controller 4.

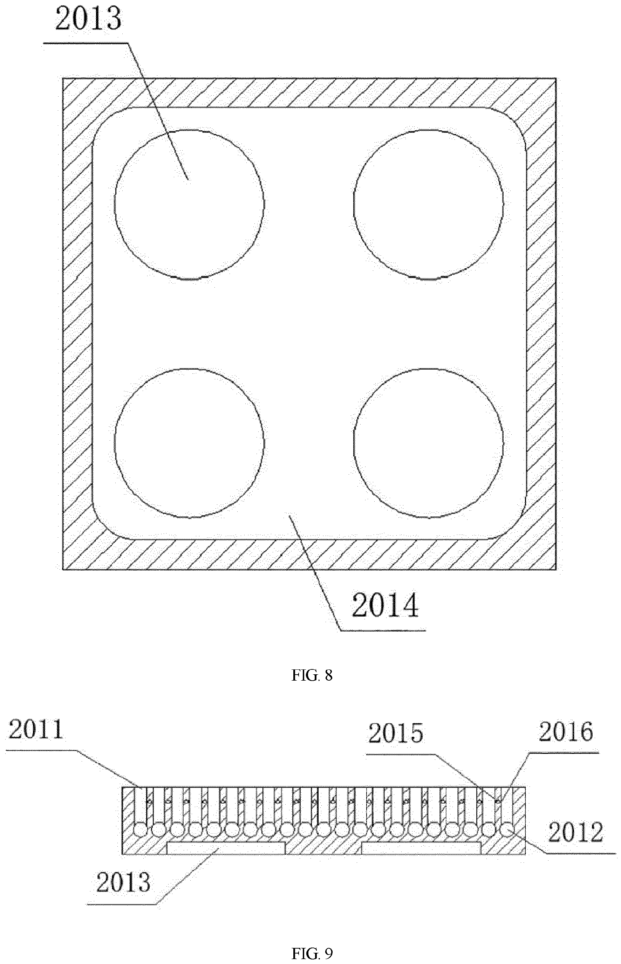

The cushioning pad 1 is elastic. Two side plate assemblies 2 are arranged, and are respectively connected to two sides of the cushioning pad 1. Each side plate assembly 2 includes a porous plate 201, an oil distribution structure 202, and jack posts 203. A plurality of rows and a plurality of columns of jack post holes 2011 are provided in a side of the porous plate 201 away from the cushioning pad 1. A plurality of oil distribution channel holes 2012 are provided in the porous plate 201. Each oil distribution channel hole 2012 is in communication with one row of jack post holes 2011. Referring to FIG. 9, each jack post hole 2011 extends from the side of the porous plate 201 away from the cushioning pad 1 to the oil distribution channel hole 2012. The oil distribution structure 202 includes oil distribution channels 2021 having a one-to-one correspondence with the plurality of oil distribution channel holes 2012 and an oil inlet cavity 2022 in communication with first ends of the plurality of oil distribution channels 2021. The oil inlet cavity 2022 is connected to an oil inlet nozzle 2023. Oil outlet holes 20211 having a one-to-one correspondence with jack post holes 2011 in a corresponding row are provided in each oil distribution channel 2021. Each oil distribution channel 2021 is movably arranged in a corresponding oil distribution channel hole 2012 and has a first position that allows communication between each oil outlet hole 20211 and a corresponding jack post hole 2011 and a second position that allows each oil outlet hole 20211 to be blocked by a hole wall of the oil distribution channel hole 2012. A plurality of rows and a plurality of columns of jack posts 203 are arranged and have a one-to-one correspondence with the plurality of rows and the plurality of columns of jack post holes 2011. The jack posts 203 are movably arranged in the jack post holes 2011. A plurality of groups of electromagnets 3 are arranged. Each group of electromagnets 3 includes two electromagnets 3 arranged opposite to each other and respectively arranged on the two sides of the cushioning pad 1. The controller 4 is respectively electrically connected to each electromagnet 3.

In this embodiment, the cushioning pad 1 is arranged between two side plate assemblies 2. The cushioning pad 1 has both the damping function and the function of connecting the two side plate assemblies 2, so that the damping in construction nodes can be increased, and the energy consumption capability and the shock resistance capability of the nodes in earthquakes can be increased. During use, pressure may be applied to the side plate assemblies 2 on left and right sides of the entire caulking monitoring servo apparatus, to compress the cushioning pad 1. When the thickness of the entire caulking monitoring servo apparatus is less than the width of a gap to be caulked, the caulking monitoring servo apparatus may be readily caulked in the gap. After the caulking monitoring servo apparatus is caulked in the gap, the pressure on the side plate assemblies 2 is released, that is, the compression of the cushioning pad 1 is released, and the elastic force of the cushioning pad 1 make the jack posts 203 of the side plate assemblies 2 abut against sidewalls of the gap. Next, the positions of oil distribution channels 2021 are adjusted, so that the positions of the oil distribution channels in the oil distribution channel holes 2012 are a first position. In this case, the oil outlet holes 20211 in the oil distribution channels 2021 are in communication with the jack post holes 2011. Next, the electromagnets 3 are energized to make two opposite electromagnets 3 have the same polarity, and a real-time value of repulsion between each group of electromagnets 3 is recorded as a monitored value of adaptive adjustment of the jack posts 203. Next, the oil inlet nozzle 2023 is externally connected to an oil pump, and hydraulic oil is fed into the oil inlet cavity 2022. The hydraulic oil enters the jack post holes 2011 through the oil outlet holes 20211, and the jack posts 203 are pushed by the hydraulic oil to move outward, to enable the jack posts 203 to tightly abut against two sidewalls of the gap. When the sidewalls of the gap are not flat, the jack posts 203 at different positions move outward by different distances, to achieve applicability to caulking when the sidewalls of the gap are not flat. When the monitored value starts to change, it indicates that in this case the positions of the jack posts 203 are limited by the sidewalls of the gap and as a result the jack posts are kept from moving. The force of the hydraulic oil makes the cushioning pad 1 compress to cause the positions of two electromagnets 3 in one group of electromagnets 3 to change. In this case, it indicates that the positions of the jack posts 203 are adjusted in place. Therefore, the positions of the oil distribution channels 2021 in the oil distribution channel holes are adjusted to a second position. The oil outlet holes 20211 are blocked by hole walls of the oil distribution channel holes 2012. The oil pump is removed, and the oil inlet nozzle 2023 is sealed, to prevent the cushioning pad 1 from being further compressed. In addition, the jack posts 203 are locked after adaptive adjustment, to keep the jack posts 203 from excessively jacking the sidewalls of the gap. Next, the polarity of each group of opposite electromagnets 3 is kept the same, the real-time value of the repulsion between each group of electromagnets 3 is recorded as an initial value of deformation monitoring of a gap node construction member, and simultaneously a real-time value of a magnetic force of each electromagnet 3 is recorded as a backtracking value for stopping restoring support. When the gap has undergone changes in position and shape, a spacing between the two side plate assemblies 2 is first adjusted by adjusting magnitude and polarity of magnetic forces of the groups of opposite electromagnets 3. In this case, the electromagnets 3 may repel or attract each other with a relatively large magnetic force, to drive the adjustment of the spacing between the two side plate assemblies 2. Next, the magnetic force of each electromagnet 3 is adjusted to the backtracking value, the repulsion between each group of electromagnets 3 is observed, and the electromagnets 3 are repeatedly enabled to repel or attract each other with a relatively large magnetic force, until the repulsion between each group of electromagnets 3 reaches the initial value, indicating that the spacing of the gap returns to the state before deformation, and the member is restored. Therefore, the caulking monitoring servo apparatus has functions such as caulking, monitoring, and restoring and has high adaptability to nonplanar complex gap sidewalls such as rough and uneven surfaces and voids and pits.

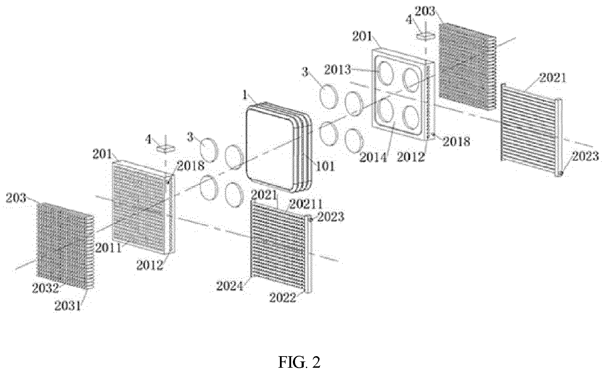

It needs to be noted that an outer diameter of each oil distribution channel 2021 is equal to a hole diameter of the oil distribution channel hole 2012. A spacing between two adjacent oil distribution channels 2021 is equal to a spacing between two adjacent oil distribution channel holes 2012. Referring to FIG. 1 and FIG. 2, the jack post holes 2011 located in the same horizontal direction are a row of jack post holes 2011, and the jack post holes 2011 located in the same vertical direction are a column of jack post holes 2011. Correspondingly, the jack posts 203 located in the same horizontal direction are a row of jack posts 203, and the jack posts 203 located in the same vertical direction are a column of jack posts 203.

Based on the foregoing embodiments, in a preferred embodiment, the oil distribution channel hole 2012 penetrates the porous plate 201. The length of the oil distribution channel 2021 is greater than the length of the oil distribution channel hole 2012. The oil distribution structure 202 further includes a sealing plate 2024 configured to seal second ends of the plurality of oil distribution channels 2021. As shown in FIG. 2, the sealing plate 2024 is a strip-shaped plate material, and may be fixedly connected to the second ends of the oil distribution channels 2021 by welding or bonding with a sealant. In the embodiment, during mounting, first the oil distribution channels 2021 pass through the oil distribution channel holes 2012. Next, the sealing plate 2024 is fixedly connected to the second ends of the oil distribution channels, to seal the second ends of the oil distribution channels 2021. The mounting manner is relatively simple, and the oil distribution channels 2021 can be prevented from sliding out of the oil distribution channel holes 2012. In an alternative embodiment, the second ends of the oil distribution channels 2021 may be closed during processing. That is, each oil distribution channel 2021 is a tubular structure with one closed end and one open end.

Optionally, based on the foregoing embodiments, in a preferred embodiment, as shown in FIG. 2 and FIG. 8, a plurality of first limit grooves 2013 are provided in the porous plate 201, and the electromagnets 3 are arranged in the first limit grooves 2013. In the embodiment, the first limit grooves 2013 are provided in the porous plate 201 to facilitate the mounting and fixing of the electromagnets 3. Specifically, a quantity of the first limit grooves 2013 in one porous plate 201 is equal to a quantity of groups of the electromagnets 3. A cross-sectional size of each first limit groove 2013 is consistent when a cross-sectional size of each electromagnet 3. In an alternative embodiment, the first limit grooves 2013 may be omitted, and the electromagnets 3 are fixed on the porous plate 201 by bonding. In another alternative embodiment, the electromagnets 3 may be fixed at two ends of the cushioning pad 1 by bonding.

Based on the foregoing embodiments, in a preferred embodiment, further referring to FIG. 2 and FIG. 8, a second limit groove 2014 is further provided in the porous plate 201, the cushioning pad 1 is arranged in the second limit groove 2014, each first limit groove 2013 is provided at a groove bottom of the second limit groove 2014, and the depth of the first limit groove 2013 is equal to the thickness of the electromagnet 3. In this embodiment, the second limit groove 2014 is provided in the porous plate 201 to facilitate the mounting and fixing of the cushioning pad 1. In addition, the first limit grooves 2013 are provided at the groove bottom of the second limit groove 2014, and the depth of the first limit groove 2013 is equal to the thickness of the electromagnet 3, so that after the electromagnet 3 is fixed in the first limit grooves 2013, an end surface of the electromagnet 3 is flush with the groove bottom of the second limit groove 2014, causing no interference with the mounting of the cushioning pad 1.

In a specific embodiment, only one cushioning pad 1 is provided. Correspondingly, one second limit groove 2014 is provided in one porous plate 201. Referring to FIG. 2 and FIG. 8, bottom plates at two ends of the cushioning pad 1 are approximately square plates. The shape and size of the second limit groove 2014 are consistent with those of the bottom plates.

Based on the foregoing embodiments, in a preferred embodiment, four groups of electromagnets 3 are arranged and are respectively arranged near four corners of the porous plate 201. In this embodiment, four groups of electromagnets 3 are arranged and are respectively arranged near four corners of the porous plate 201, so that multi-point synchronous deformation monitoring of gap nodes can be completed, and meanwhile magnetic force-based node restoration can be completed according to detection values. Certainly, in other alternative embodiments, more electromagnets 3 may be arranged.

Based on the foregoing embodiments, in a preferred embodiment, two controllers 4 are arranged and are respectively arranged on two porous plates 201, and each controller 4 is respectively electrically connected to a plurality of electromagnets 3 arranged on the same side of the cushioning pad 1. In this embodiment, two controllers 4 are arranged, to facilitate monitoring and recording of each electromagnet 3. In addition, the controllers 4 are arranged on the porous plate 201. After the caulking monitoring servo apparatus is caulked in a gap, the controllers 4 are also fixed accordingly. The entire caulking monitoring servo apparatus is integrated. Certainly, in other alternative embodiments, only one controller 4 may be arranged.

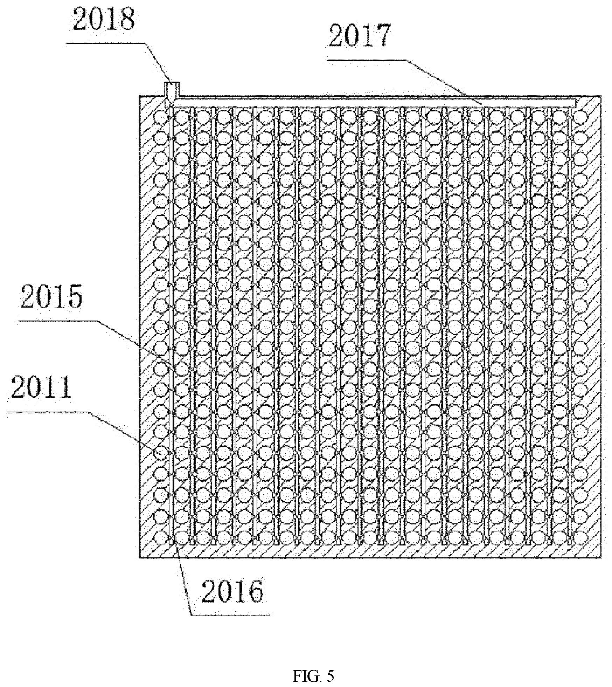

Based on the foregoing embodiments, in a preferred embodiment, as shown in FIG. 5, oil return branch passages 2015 and an oil return main passage 2017 are further provided in the porous plate 201. The oil return branch passages 2015 are arranged between any two adjacent rows of jack post holes 2011. The jack post holes 2011 are in communication with the oil return branch passage 2015 through oil discharge ports 2016. The oil return main passage 2017 is arranged on the same side of a plurality of oil return branch passages 2015, and is in communication with the oil return branch passages 2015. An end of the oil return main passage 2017 is connected to an oil return nozzle 2018. The oil return nozzle 2018 protrudes from the porous plate 201. In this embodiment, a return oil storage apparatus is externally connected to the oil return nozzle 2018, and the oil return branch passages 2015 and the oil return main passage 2017 are arranged to limit movement ranges of the jack posts 203. When the jack posts 203 move outward until the oil discharge ports 2016 are no longer blocked by the jack posts 203, the hydraulic oil in the oil distribution channels 2021 flows into the oil return branch passages 2015 through the oil holes, the jack post holes 2011, and the oil discharge ports 2016, to eventually converge in the oil return main passage 2017 and flow into the return oil storage apparatus through the oil return nozzle 2018. In this case, the jack posts 203 lose the pressure from the hydraulic oil and can no longer move outward. Therefore, movement ranges of inner ends of the jack posts 203 are between the oil distribution channel hole 2012 and the oil discharge ports 2016. In addition, the oil return branch passages 2015 and the oil return main passage 2017 are arranged, so that the hydraulic oil can be recycled.

It needs to be noted that the inner ends of the jack posts 203 refer to ends of the jack posts 203 close to the oil distribution channel hole 2012.

Based on the foregoing embodiments, in a preferred embodiment, further referring to FIG. 2, each jack post 203 includes a solid post body 2031 and a solid post cap 2032. The diameter of the post body 2031 is equal to the diameter of the oil outlet hole 20211. The post cap 2032 has a hemispherical shape. In this embodiment, with a hemispherical shape, the post cap 2032 can abut against sidewalls of different gaps, and the jack posts 203 have solid structures and do not deform easily, so that node deformation monitoring and support restoring are kept from being affected by deformations of the jack posts 203.

Based on the foregoing embodiments, in a preferred embodiment, the cushioning pad 1 has a hollow cavity. An air hole 101 in communication with the hollow cavity is provided in a sidewall of the cushioning pad 1. The sidewall of the cushioning pad 1 has a corrugated shape. Referring to FIG. 2, the top and bottom of the cushioning pad 1 are both sealed by the bottom plates. Each sidewall of the cushioning pad 1 is provided with an air hole 101, to discharge air when the cushioning pad 1 is impacted. The stiffness of the cushioning pad 1 is greater than the stiffness of a spring and is elastic, and the cushioning pad may restore under the elasticity thereof to suck air, thereby implementing air cushioning, so that the damping in construction nodes can be increased, and the energy consumption capability and the shock resistance capability of the nodes in earthquakes can be increased.

In a specific embodiment, the cushioning pad 1 is made of an aromatic polyamide reinforced material.

### Embodiment 2

This embodiment further provides a caulking restoring method, applied to the caulking monitoring servo apparatus provided in the foregoing embodiment. The caulking restoring method includes:
S 1. Compress the cushioning pad 1 to make a total thickness of the caulking monitoring servo apparatus less than a width of a gap to be caulked. Specifically, pressure may be applied to the side plate assemblies 2 on left and right sides of the entire caulking monitoring servo apparatus, to compress the cushioning pad 1. When the thickness of the entire caulking monitoring servo apparatus is less than the width of a gap to be caulked, the caulking monitoring servo apparatus may be readily caulked in the gap.
S2. Insert the caulking monitoring servo apparatus into the gap, and release the compression of the cushioning pad 1, where an elastic force of the cushioning pad 1 makes the jack posts 203 abut against a sidewall of the gap. Specifically, the compression of the cushioning pad 1 is released by releasing the pressure on the side plate assemblies 2.
S3. Adjust the positions of the oil distribution channels 2021 in the oil distribution channel holes 2012 to a first position. In this case, oil outlet holes 20211 in the oil distribution channels 2021 are in communication with jack post holes 2011.
S4. Energize the electromagnets 3 to make two opposite electromagnets 3 have the same polarity, and record a real-time value of repulsion between each group of electromagnets 3 as a monitored value of adaptive adjustment of the jack posts 203. Specifically, the controller 4 may control the polarity of the electromagnets 3 by controlling the directions of currents in the electromagnets 3. A pressure sensor may be arranged on a contact surface between the first limit grooves 2013 or the electromagnets 3 and the porous plate 201. The controller 4 is communicatively connected to the pressure sensor. The value of repulsion is monitored by monitoring the value of the pressure sensor. When the magnitude of the currents in the electromagnets 3 remains unchanged and the spacing between two electromagnets 3 does not change, the value of repulsion remains unchanged.
S5. Externally connect the oil inlet nozzle 2023 to an oil pump, feed hydraulic oil into the oil inlet cavity 2022, where the hydraulic oil enters the jack post holes 2011 through the oil outlet holes 20211, and the jack posts 203 are pushed by the hydraulic oil to move outward, and when the monitored value starts to change, adjust the positions of the oil distribution channels 2021 in the oil distribution channel holes to the second position, removing the oil pump, and seal the oil inlet nozzle 2023. When the jack posts 203 are pushed by the hydraulic oil to move outward, so that the jack posts 203 can be enabled to tightly abut against two sidewalls of the gap. When the sidewalls of the gap are not flat, the jack posts 203 at different positions move outward by different distances, to achieve applicability to caulking when the sidewalls of the gap are not flat. When the monitored value starts to change, it indicates that in this case the positions of the jack posts 203 are limited by the sidewalls of the gap and as a result the jack posts are kept from moving. The force of the hydraulic oil makes the cushioning pad 1 compress to cause the positions of two electromagnets 3 in one group of electromagnets 3 to change. In this case, it indicates that the positions of the jack posts 203 are adjusted in place. Therefore, the positions of the oil distribution channels 2021 in the oil distribution channel holes are adjusted to a second position. The oil outlet holes 20211 are blocked by hole walls of the oil distribution channel holes 2012. The oil pump is removed, and the oil inlet nozzle 2023 is sealed, to prevent the cushioning pad 1 from being further compressed. In addition, the jack posts 203 are locked after adaptive adjustment, to keep the jack posts 203 from excessively jacking the sidewalls of the gap.
S6. Keep the polarity of each group of opposite electromagnets 3 the same, record the real-time value of the repulsion between each group of electromagnets 3 as an initial value of deformation monitoring of a gap node construction member, and simultaneously record a real-time value of a magnetic force of each electromagnet 3 as a backtracking value for stopping restoring support.

When the gap has undergone changes in position and shape, the caulking restoring method further includes:
S7. Adjust a spacing between the two side plate assemblies 2 by adjusting magnitude and polarity of magnetic forces of the groups of opposite electromagnets 3. Specifically, the magnitude and polarity of the magnetic forces of the electromagnets 3 are adjusted by controlling the magnitude and directions of the current fed into the electromagnets 3. In this case, the electromagnets 3 may repel or attract each other with a relatively large magnetic force, to drive the rapid adjustment of the spacing between the two side plate assemblies 2. Referring to FIG. 1 and FIG. 2, after the caulking monitoring servo apparatus is caulked into a gap, the oil inlet nozzle 2023 and the oil return nozzle 2018 are both located on the outer side of the gap. It is defined that an end of the caulking monitoring servo apparatus provided with the oil inlet nozzle 2023 and the oil return nozzle 2018 is a protruding end, and an end inserted in the gap is an inserting end. When the member is horizontally twisted, the spacing between the two opposite electromagnets 3 in each group near the inserting end increases, and the spacing between the opposite electromagnets 3 in each group near the protruding end decreases. During restoring, it is implemented that the two opposite electromagnets 3 in each group near the inserting end attract with a relatively large magnetic force and the opposite electromagnets 3 in each group near the protruding end repel with a relatively large magnetic force, to rapid adjusting the spacing between the two side plate assemblies 2, and the side plate assemblies 2 support the member to restore during movement.
S8. Adjust the magnetic force of each electromagnet 3 to the backtracking value, and observe the repulsion between each group of electromagnets 3 and repeating the step S7 until the repulsion between each group of electromagnets 3 reaches the initial value. When the magnetic force of each electromagnet 3 is adjusted to the backtracking value and the repulsion between each group of electromagnets 3 reaches the initial value, it indicates that the member is restored.

## Claims

1. A caulking monitoring servo apparatus, comprising:
a cushioning pad (1);
two side plate assemblies (2), respectively connected to two sides of the cushioning pad (1), wherein each side plate assembly (2) comprises a porous plate (201), an oil distribution structure (202), and jack posts (203), a plurality of rows and a plurality of columns of jack post holes (2011) are provided in a side of the porous plate (201) away from the cushioning pad (1), a plurality of oil distribution channel holes (2012) are provided in the porous plate (201), each oil distribution channel hole (2012) is in communication with one row of jack post holes (2011), the oil distribution structure (202) comprises oil distribution channels (2021) having a one-to-one correspondence with the plurality of oil distribution channel holes (2012) and an oil inlet cavity (2022) in communication with first ends of the plurality of oil distribution channels (2021), the oil inlet cavity (2022) is connected to an oil inlet nozzle (2023), oil outlet holes (20211) having a one-to-one correspondence with jack post holes (2011) in a corresponding row are provided in each oil distribution channel (2021), each oil distribution channel (2021) is movably arranged in a corresponding oil distribution channel hole (2012) and has a first position that allows communication between each oil outlet hole (20211) and a corresponding jack post hole (2011) and a second position that allows each oil outlet hole (20211) to be blocked by a hole wall of the oil distribution channel hole (2012), a plurality of rows and a plurality of columns of jack posts (203) are arranged and have a one-to-one correspondence with the plurality of rows and the plurality of columns of jack post holes (2011), and the jack posts (203) are movably arranged in the jack post holes (2011);
a plurality of groups of electromagnets (3), wherein each group of electromagnets (3) comprises two electromagnets (3) arranged opposite to each other and respectively arranged on the two sides of the cushioning pad (1); and
a controller (4), respectively electrically connected to each electromagnet (3).

2. The caulking monitoring servo apparatus according to claim 1, wherein the oil distribution channel hole (2012) penetrates the porous plate (201), a length of the oil distribution channel (2021) is greater than a length of the oil distribution channel hole (2012), and the oil distribution structure (202) further comprises a sealing plate (2024) configured to seal second ends of the plurality of oil distribution channels (2021).

3. The caulking monitoring servo apparatus according to claim 1, wherein a plurality of first limit grooves (2013) are provided in the porous plate (201), and the electromagnets (3) are arranged in the first limit grooves (2013).

4. The caulking monitoring servo apparatus according to claim 3, wherein a second limit groove (2014) is further provided in the porous plate (201), the cushioning pad (1) is arranged in the second limit groove (2014), each first limit groove (2013) is provided at a groove bottom of the second limit groove (2014), and a depth of the first limit groove (2013) is equal to a thickness of the electromagnet (3).

5. The caulking monitoring servo apparatus according to claim 3, wherein four groups of electromagnets (3) are arranged and are respectively arranged near four corners of the porous plate (201).

6. The caulking monitoring servo apparatus according to claim 1, wherein two controllers (4) are arranged and are respectively arranged on two porous plates (201), and each controller (4) is respectively electrically connected to a plurality of electromagnets (3) arranged on the same side of the cushioning pad (1).

7. The caulking monitoring servo apparatus according to any one of claims 1 to 6, wherein the porous plate (201) is further provided with:
oil return branch passages (2015), arranged between any two adjacent rows of jack post holes (2011), wherein the jack post holes (2011) are in communication with the oil return branch passage (2015) through oil discharge ports (2016); and
an oil return main passage (2017), arranged on the same side of a plurality of oil return branch passages (2015), and being in communication with the oil return branch passages (2015), wherein an end of the oil return main passage (2017) is connected to an oil return nozzle (2018), and the oil return nozzle (2018) protrudes from the porous plate (201).

8. The caulking monitoring servo apparatus according to any one of claims 1 to 6, wherein each jack post (203) comprises a solid post body (2031) and a solid post cap (2032), a diameter of the post body (2031) is equal to a diameter of the oil outlet hole (20211), and the solid post cap (2032) has a hemispherical shape.

9. The caulking monitoring servo apparatus according to any one of claims 1 to 6, wherein the cushioning pad (1) has a hollow cavity, an air hole (101) in communication with the hollow cavity is provided in a sidewall of the cushioning pad (1), and the sidewall of the cushioning pad (1) has a corrugated shape.

10. A caulking restoring method, applied to the caulking monitoring servo apparatus according to any one of claims 1 to 9, wherein the caulking restoring method comprises:
S1. compressing the cushioning pad (1) to make a total thickness of the caulking monitoring servo apparatus less than a width of a gap to be caulked;
S2. inserting the caulking monitoring servo apparatus into the gap, and releasing the compression of the cushioning pad (1), wherein an elastic force of the cushioning pad (1) makes the jack posts (203) abut against a sidewall of the gap;
S3. adjusting positions of the oil distribution channels (2021) in the oil distribution channel holes (2012) to the first position;
S4. energizing the electromagnets (3) to make two opposite electromagnets (3) have the same polarity, and recording a real-time value of repulsion between each group of electromagnets (3) as a monitored value of adaptive adjustment of the jack posts (203);
S5. externally connecting the oil inlet nozzle (2023) to an oil pump, feeding hydraulic oil into the oil inlet cavity (2022), wherein the hydraulic oil enters the jack post holes (2011) through the oil outlet holes (20211), and the jack posts (203) are pushed by the hydraulic oil to move outward, and when the monitored value starts to change, adjusting the positions of the oil distribution channels (2021) in the oil distribution channel holes to the second position, removing the oil pump, and sealing the oil inlet nozzle (2023); and
S6. keeping the polarity of each group of opposite electromagnets (3) the same, recording the real-time value of the repulsion between each group of electromagnets (3) as an initial value of deformation monitoring of a gap node construction member, and simultaneously recording a real-time value of a magnetic force of each electromagnet (3) as a backtracking value for stopping restoring support; and
when the gap has undergone changes in position and shape, the caulking restoring method further comprises:
S7. adjusting a spacing between the two side plate assemblies (2) by adjusting magnitude and polarity of magnetic forces of the groups of opposite electromagnets (3); and
S8. adjusting the magnetic force of each electromagnet (3) to the backtracking value, and observing the repulsion between each group of electromagnets (3) and repeating the step S7 until the repulsion between each group of electromagnets (3) reaches the initial value.

## Patentansprüche

1. Verstemmüberwachungsservovorrichtung, umfassend:
ein Polster (1);
zwei Seitenplattenanordnungen (2), die jeweils mit zwei Seiten des Polsters (1) verbunden sind, wobei jede Seitenplattenanordnung (2) eine poröse Platte (201), eine Ölverteilungsstruktur (202) und Steckbolzen (203) umfasst, eine Vielzahl von Reihen und eine Vielzahl von Spalten von Steckbolzenlöchern (2011) in einer Seite der porösen Platte (201) weg von dem Polster (1) bereitgestellt sind, eine Vielzahl von Ölverteilungskanallöchern (2012) in der porösen Platte (201) bereitgestellt sind, jedes Ölverteilungskanalloch (2012) in Kommunikation mit einer Reihe von Steckbolzenlöchern (2011) steht, die Ölverteilungsstruktur (202) Ölverteilungskanäle (2021), die eine Eins-zu-eins-Entsprechung mit der Vielzahl von Ölverteilungskanallöchern (2012) aufweisen, und einen Öleinlasshohlraum (2022) umfasst, der in Kommunikation mit ersten Enden der Vielzahl von Ölverteilungskanälen (2021) steht, wobei der Öleinlasshohlraum (2022) mit einer Öleinlassdüse (2023) verbunden ist, Ölauslasslöcher (20211), die eine Eins-zu-eins-Entsprechung mit Steckbolzenlöchern (2011) in einer entsprechenden Reihe aufweisen, in jedem Ölverteilungskanal (2021) bereitgestellt sind, jeder Ölverteilungskanal (2021) in einem entsprechenden Ölverteilungskanalloch (2012) bewegbar angeordnet ist und eine erste Position, die die Kommunikation zwischen jedem Ölauslassloch (20211) und einem entsprechenden Steckbolzenloch (2011) ermöglicht, und eine zweite Position aufweist, die es ermöglicht, dass jedes Ölauslassloch (20211) durch eine Lochwand des Ölverteilungskanallochs (2012) blockiert wird, eine Vielzahl von Reihen und eine Vielzahl von Spalten von Steckbolzen (203) angeordnet sind und eine Eins-zu-eins-Entsprechung mit der Vielzahl von Reihen und der Vielzahl von Spalten von Steckbolzenlöchern (2011) aufweisen, und die Steckbolzen (203) in den Steckbolzenlöchern (2011) bewegbar angeordnet sind;
eine Vielzahl von Gruppen von Elektromagneten (3), wobei jede Gruppe von Elektromagneten (3) zwei Elektromagneten (3) umfasst, die einander gegenüberliegend angeordnet sind und jeweils auf den zwei Seiten des Polsters (1) angeordnet sind; und
eine Steuerung (4), die jeweils mit jedem Elektromagneten (3) elektrisch verbunden ist.

2. Verstemmüberwachungsservovorrichtung nach Anspruch 1, wobei das Ölverteilungskanalloch (2012) die poröse Platte (201) durchdringt, eine Länge des Ölverteilungskanals (2021) größer als eine Länge des Ölverteilungskanallochs (2012) ist und die Ölverteilungsstruktur (202) ferner eine Dichtungsplatte (2024) umfasst, die konfiguriert ist, um zweite Enden der Vielzahl von Ölverteilungskanälen (2021) abzudichten.

3. Verstemmüberwachungsservovorrichtung nach Anspruch 1, wobei eine Vielzahl von ersten Grenznuten (2013) in der porösen Platte (201) bereitgestellt sind und die Elektromagneten (3) in den ersten Grenznuten (2013) angeordnet sind.

4. Verstemmüberwachungsservovorrichtung nach Anspruch 3, wobei eine zweite Grenznut (2014) ferner in der porösen Platte (201) bereitgestellt ist, das Polster (1) in der zweiten Grenznut (2014) angeordnet ist, jede erste Grenznut (2013) an einem Nutboden der zweiten Grenznut (2014) bereitgestellt ist und eine Tiefe der ersten Grenznut (2013) gleich einer Dicke des Elektromagneten (3) ist.

5. Verstemmüberwachungsservovorrichtung nach Anspruch 3, wobei vier Gruppen von Elektromagneten (3) angeordnet sind und jeweils in der Nähe von vier Ecken der porösen Platte (201) angeordnet sind.

6. Verstemmüberwachungsservovorrichtung nach Anspruch 1, wobei zwei Steuerungen (4) angeordnet sind und jeweils auf zwei porösen Platten (201) angeordnet sind, und jede Steuerung (4) jeweils mit einer Vielzahl von Elektromagneten (3) elektrisch verbunden ist, die auf derselben Seite des Polsters (1) angeordnet sind.

7. Verstemmüberwachungsservovorrichtung nach einem der Ansprüche 1 bis 6, wobei die poröse Platte (201) ferner bereitgestellt ist mit:
Ölrücklaufzweigdurchgängen (2015), die zwischen beliebigen zwei benachbarten Reihen von Steckbolzenlöchern (2011) angeordnet sind, wobei die Steckbolzenlöcher (2011) durch Ölabführöffnungen (2016) mit dem Ölrücklaufzweigdurchgang (2015) in Kommunikation stehen; und
einen Ölrücklaufhauptdurchgang (2017), der auf derselben Seite einer Vielzahl von Ölrücklaufzweigdurchgängen (2015) angeordnet ist und mit den Ölrücklaufzweigdurchgängen (2015) in Kommunikation steht, wobei ein Ende des Ölrücklaufhauptdurchgangs (2017) mit einer Ölrücklaufdüse (2018) verbunden ist und die Ölrücklaufdüse (2018) aus der porösen Platte (201) hervorsteht.

8. Verstemmüberwachungsservovorrichtung nach einem der Ansprüche 1 bis 6, wobei jeder Steckbolzen (203) einen massiven Bolzenkörper (2031) und eine massive Bolzenkappe (2032) umfasst, wobei ein Durchmesser des Bolzenkörpers (2031) gleich einem Durchmesser des Ölauslasslochs (20211) ist und die massive Bolzenkappe (2032) eine halbkugelförmige Form aufweist.

9. Verstemmüberwachungsservovorrichtung nach einem der Ansprüche 1 bis 6, wobei das Polster (1) einen Hohlraum aufweist, ein Luftloch (101), das mit dem Hohlraum in Kommunikation steht, in einer Seitenwand des Polsters (1) bereitgestellt ist und die Seitenwand des Polsters (1) eine gewellte Form aufweist.

10. Verstemmwiederherstellungsverfahren, das auf die Verstemmüberwachungsservovorrichtung nach einem der Ansprüche 1 bis 9 angewendet wird, wobei das Verstemmwiederherstellungsverfahren umfasst:
S1. Komprimieren des Polsters (1), um eine Gesamtdicke der Verstemmüberwachungsservovorrichtung kleiner als eine Breite eines zu verstemmenden Spalts zu ergeben;
S2. Einführen der Verstemmüberwachungsservovorrichtung in den Spalt und Lösen der Kompression des Polsters (1), wobei eine elastische Kraft des Polsters (1) ergibt, dass die Steckbolzen (203) an einer Seitenwand des Spalts anliegen;
S3. Verstellen von Positionen der Ölverteilungskanäle (2021) in den Ölverteilungskanallöchern (2012) in die erste Position;
S4. Speisen der Elektromagneten (3), um zu ergeben, dass zwei gegenüberliegende Elektromagneten (3) dieselbe Polarität aufweisen, und Aufzeichnen eines Echtzeitwerts einer Abstoßung zwischen jeder Gruppe von Elektromagneten (3) als ein überwachter Wert der anpassenden Verstellung der Steckbolzen (203);
S5. externes Verbinden der Öleinlassdüse (2023) mit einer Ölpumpe, Zuführen von Hydrauliköl in den Öleinlasshohlraum (2022), wobei das Hydrauliköl durch die Ölauslasslöcher (20211) in die Steckbolzenlöcher (2011) eintritt und die Steckbolzen (203) durch das Hydrauliköl gedrückt werden, um sich nach außen zu bewegen, und wenn der überwachte Wert sich zu ändern beginnt, Verstellen der Positionen der Ölverteilungskanäle (2021) in den Ölverteilungskanallöchern in die zweite Position, Entfernen der Ölpumpe und Abdichten der Öleinlassdüse (2023); und
S6. Beibehalten der Polarität jeder Gruppe gegenüberliegender Elektromagneten (3), Aufzeichnen des Echtzeitwerts der Abstoßung zwischen jeder Gruppe von Elektromagneten (3) als ein Anfangswert einer Verformungsüberwachung eines Spaltknotenkonstruktionselements und gleichzeitiges Aufzeichnen eines Echtzeitwerts einer magnetischen Kraft jedes Elektromagneten (3) als ein Rückverfolgungswert zum Stoppen einer Wiederherstellungsunterstützung; und
wenn sich die Position und Form des Spalts geändert haben, das Verstemmwiederherstellungsverfahren ferner umfasst:
S7. Verstellen eines Abstands zwischen den zwei Seitenplattenanordnungen (2) durch Verstellen einer Stärke und Polarität von magnetischen Kräften der Gruppen gegenüberliegender Elektromagneten (3); und
S8. Verstellen der magnetischen Kraft jedes Elektromagneten (3) auf den Rückverfolgungswert und Beobachten der Abstoßung zwischen jeder Gruppe von Elektromagneten (3) und Wiederholen des Schritts S7, bis die Abstoßung zwischen jeder Gruppe von Elektromagneten (3) den Anfangswert erreicht.

## Revendications

1. Appareil d'asservissement pour surveillance de calfeutrage, comprenant :
un coussin amortisseur (1) ;
deux ensembles de plaque latérale (2), respectivement reliés à deux côtés du coussin amortisseur (1), dans lequel chaque ensemble de plaque latérale (2) comprend une plaque poreuse (201), une structure de distribution d'huile (202), et des poteaux télescopiques (203), une pluralité de rangées et une pluralité de colonnes de trous de poteaux télescopiques (2011) sont fournies sur un côté de la plaque poreuse (201) éloigné du coussin amortisseur (1), une pluralité de trous de canal de distribution d'huile (2012) sont fournis dans la plaque poreuse (201), chaque trou de canal de distribution d'huile (2012) est en communication avec une rangée de trous de poteaux télescopiques (2011), la structure de distribution d'huile (202) comprend des canaux de distribution d'huile (2021) ayant une correspondance biunivoque avec la pluralité de trous de canal de distribution d'huile (2012) et une cavité d'entrée d'huile (2022) en communication avec des premières extrémités de la pluralité de canaux de distribution d'huile (2021), la cavité d'entrée d'huile (2022) est reliée à une buse d'entrée d'huile (2023), des trous de sortie d'huile (20211) ayant une correspondance biunivoque avec des trous de poteaux télescopiques (2011) dans une rangée correspondante sont fournis dans chaque canal de distribution d'huile (2021), chaque canal de distribution d'huile (2021) est agencé de manière mobile dans un trou de canal de distribution d'huile correspondant (2012) et a une première position qui permet une communication entre chaque trou de sortie d'huile (20211) et un trou de poteau télescopique (2011) correspondant et une seconde position qui permet à chaque trou de sortie d'huile (20211) d'être bloqué par une paroi de trou du trou de canal de distribution d'huile (2012), une pluralité de rangées et une pluralité de colonnes de poteaux télescopiques (203) sont agencées et ont une correspondance biunivoque avec la pluralité de rangées et la pluralité de colonnes de trous de poteaux télescopiques (2011), et les poteaux télescopiques (203) sont agencés de manière mobile dans les trous de poteaux télescopiques (2011) ;
une pluralité de groupes d'électroaimants (3), dans lequel chaque groupe d'électroaimants (3) comprend deux électroaimants (3) agencés à l'opposé l'un de l'autre et respectivement agencés sur les deux côtés du coussin amortisseur (1) ; et
un dispositif de commande (4), respectivement connecté électriquement à chaque électroaimant (3).

2. Appareil d'asservissement pour surveillance de calfeutrage selon la revendication 1, dans lequel le trou de canal de distribution d'huile (2012) pénètre dans la plaque poreuse (201), une longueur du canal de distribution d'huile (2021) est supérieure à une longueur du trou de canal de distribution d'huile (2012), et la structure de distribution d'huile (202) comprend en outre une plaque d'étanchéité (2024) conçue pour sceller des secondes extrémités de la pluralité de canaux de distribution d'huile (2021).

3. Appareil d'asservissement pour surveillance de calfeutrage selon la revendication 1, dans lequel une pluralité de premières rainures de limite (2013) sont fournies dans la plaque poreuse (201), et les électroaimants (3) sont agencés dans les premières rainures de limite (2013).

4. Appareil d'asservissement pour surveillance de calfeutrage selon la revendication 3, dans lequel une seconde rainure de limite (2014) est en outre fournie dans la plaque poreuse (201), le coussin amortisseur (1) est agencé dans la seconde rainure de limite (2014), chaque première rainure de limite (2013) est fournie au niveau d'un fond de rainure de la seconde rainure de limite (2014), et une profondeur de la première rainure de limite (2013) est égale à une épaisseur de l'électroaimant (3).

5. Appareil d'asservissement pour surveillance de calfeutrage selon la revendication 3, dans lequel quatre groupes d'électroaimants (3) sont agencés et sont respectivement agencés près de quatre coins de la plaque poreuse (201).

6. Appareil d'asservissement pour surveillance de calfeutrage selon la revendication 1, dans lequel deux dispositifs de commande (4) sont agencés et sont respectivement agencés sur deux plaques poreuses (201), et chaque dispositif de commande (4) est respectivement connecté électriquement à une pluralité d'électroaimants (3) agencés sur le même côté du coussin amortisseur (1).

7. Appareil d'asservissement pour surveillance de calfeutrage selon l'une quelconque des revendications 1 à 6, dans lequel la plaque poreuse (201) est en outre pourvue :
de passages de dérivation de retour d'huile (2015), agencés entre deux quelconques rangées adjacentes de trous de poteaux télescopiques (2011), dans lequel les trous de poteaux télescopiques (2011) sont en communication avec le passage de dérivation de retour d'huile (2015) à travers des orifices de décharge d'huile (2016) ; et
un passage principal de retour d'huile (2017), agencé sur le même côté d'une pluralité de passages de dérivation de retour d'huile (2015), et étant en communication avec les passages de dérivation de retour d'huile (2015), dans lequel une extrémité du passage principal de retour d'huile (2017) est reliée à une buse de retour d'huile (2018), et la buse de retour d'huile (2018) fait saillie par rapport à la plaque poreuse (201).

8. Appareil d'asservissement pour surveillance de calfeutrage selon l'une quelconque des revendications 1 à 6, dans lequel chaque poteau télescopique (203) comprend un corps de poteau solide (2031) et un capuchon de poteau solide (2032), un diamètre du corps de poteau (2031) est égal à un diamètre du trou de sortie d'huile (20211), et le capuchon de poteau solide (2032) a une forme hémisphérique.

9. Appareil d'asservissement pour surveillance de calfeutrage selon l'une quelconque des revendications 1 à 6, dans lequel le coussin amortisseur (1) a une cavité creuse, un trou d'air (101) en communication avec la cavité creuse est fourni dans une paroi latérale du coussin amortisseur (1), et la paroi latérale du coussin amortisseur (1) a une forme ondulée.

10. Procédé de rétablissement de calfeutrage, appliqué à l'appareil d'asservissement pour surveillance de calfeutrage selon l'une quelconque des revendications 1 à 9, dans lequel le procédé de rétablissement de calfeutrage comprend :
S1. la compression du coussin amortisseur (1) pour qu'une épaisseur totale de l'appareil d'asservissement pour surveillance de calfeutrage soit inférieure à une largeur d'un espace à calfeutrer ;
S2. l'insertion de l'appareil d'asservissement pour surveillance de calfeutrage dans l'espace, et le relâchement de la compression du coussin amortisseur (1), dans lequel une force élastique du coussin amortisseur (1) fait buter les poteaux télescopiques (203) contre une paroi latérale de l'espace ;
S3. l'ajustement de positions des canaux de distribution d'huile (2021) dans les trous de canal de distribution d'huile (2012) sur la première position ;
S4. la mise sous tension des électroaimants (3) pour que deux électroaimants opposés (3) aient la même polarité, et l'enregistrement d'une valeur en temps réel de répulsion entre chaque groupe d'électroaimants (3) comme valeur surveillée d'ajustement adaptatif des poteaux télescopiques (203) ;
S5. le raccordement extérieur de la buse d'entrée d'huile (2023) à une pompe à huile, alimentant en huile hydraulique la cavité d'entrée d'huile (2022), dans lequel l'huile hydraulique pénètre dans les trous de poteaux télescopiques (2011) à travers les trous de sortie d'huile (20211), et les poteaux télescopiques (203) sont poussés par l'huile hydraulique pour se déplacer vers l'extérieur, et lorsque la valeur surveillée commence à changer, l'ajustement des positions des canaux de distribution d'huile (2021) dans les trous de canal de distribution d'huile sur la seconde position, le retrait de la pompe à huile, et le scellage de la buse d'entrée d'huile (2023) ; et
S6. le maintien à l'identique de la polarité de chaque groupe d'électroaimants opposés (3), l'enregistrement de la valeur en temps réel de la répulsion entre chaque groupe d'électroaimants (3) comme valeur initiale de surveillance de déformation d'un élément de construction de noeud d'espace, et l'enregistrement simultané d'une valeur en temps réel d'une force magnétique de chaque électroaimant (3) comme valeur de retour en arrière pour l'arrêt du support de rétablissement ; et
lorsque l'espace a subi des changements de position et de forme, le procédé de rétablissement de calfeutrage comprend en outre :
S7. l'ajustement d'un espacement entre les deux ensembles de plaque latérale (2) par l'ajustement de l'amplitude et de la polarité des forces magnétiques des groupes d'électroaimants opposés (3) ; et
S8. l'ajustement de la force magnétique de chaque électroaimant (3) sur la valeur de retour en arrière, et l'observation de la répulsion entre chaque groupe d'électroaimants (3) et la répétition de l'étape S7 jusqu'à ce que la répulsion entre chaque groupe d'électroaimants (3) atteigne la valeur initiale.
